# EUROPEAN PATENT APPLICATION

(11) **EP 4 583 559 A1**
(43) Date of publication of application: **09.07.2025**
(21) Application number: 23864643.4
(22) Date of filing: 08.09.2023
(51) Int. Cl.: H04W 24/02

(54) **TARGET INFORMATION, TARGET INFORMATION ACQUISITION METHOD AND APPARATUS, AND DEVICE**

(30) Priority: 14.09.2022 CN 202211119995
(71) Applicant: Vivo Mobile Communication Co., Ltd., Dongguan, Guangdong 523863 (CN)
(72) Inventor: LYU, Huazhang, Dongguan, Guangdong 523863 (CN)
(74) Representative: Shieldmark
(86) International application number: PCT/CN2023/117731
(87) International publication number: WO 2024/055911

(57) **Abstract**

This application discloses a target information obtaining method and apparatus, an information obtaining method and apparatus, and a device. The target information obtaining method includes: receiving, by a first communication device, a first request, where the first request is used to request the first communication device to provide a related analytics result on any terminal, the first request includes first information, the first information is used by the first communication device to determine a target network element corresponding to the any terminal, and related data on the any terminal is used by the first communication device to determine the related analytics result on the any terminal; sending, by the first communication device, a second request, where the second request is used to request to discover index information of the target network element; and receiving, by the first communication device, a second response, where the second response includes the index information of the target network element, and the index information is used by the first communication device to interact with the target network element or collect the related data on the any terminal from the target network element.

## Description

### CROSS-REFERENCE TO RELATED APPLICATIONS

This application claims priority to Chinese Patent Application No. 202211119995.4, filed with the China National Intellectual Property Administration on September 14, 2022 and entitled "TARGET INFORMATION OBTAINING METHOD AND APPARATUS, INFORMATION OBTAINING METHOD AND APPARATUS, AND DEVICE", which is incorporated herein by reference in its entirety.

### TECHNICAL FIELD

This application pertains to the field of communication technologies, and specifically relates to a target information obtaining method and apparatus, an information obtaining method and apparatus, and a device.

### BACKGROUND

An NWDAF (Network Data Analytics Function) has an AI intelligent analytics function. When an analytics request (such as an analytics subscription or an analytics obtaining request) for a terminal is received from an NWDAF service subscriber or a 5G core network element (such as an NF, Network Function), the NWDAF obtains or collects related data on a target terminal, and uses a built-in algorithm and an analytics capability to obtain an analytics result and return the analytics result to the 5G core network element, so that the 5G core network element can perform some operation optimization or statistical analysis.

In the related art, the NWDAF mainly discovers index information of a target network element (for example, an IP address or an ID of the target network element) directly from an NRF (Network Repository Function) based on critical parameters in the analytics request provided by the 5G core network element, and then interacts with the target network element to obtain or collect the related data on the terminal through the target network element.

However, the manner of obtaining the index information of the target network element solely based on the critical parameters in the analytics request is simplistic, and can hardly ensure effective obtaining of the index information of the target network element. In addition, the NWDAF service subscriber or the 5G core network element sometimes does not provide the critical parameters, making the NWDAF unable to accurately obtain the index information of the target network element.

### SUMMARY

Embodiments of this application provide a target information obtaining method and apparatus, an information obtaining method and apparatus, and a device to resolve a problem that a manner of obtaining index information of a target network element solely based on critical parameters in an analytics request is simplistic and can hardly ensure effective obtaining of the index information of the target network element.

According to a first aspect, a target information obtaining method is provided and includes:
receiving, by a first communication device, a first request, where the first request is used to request the first communication device to provide a related analytics result on any terminal, the first request includes first information, the first information is used by the first communication device to determine a target network element corresponding to the any terminal, and related data on the any terminal is used by the first communication device to determine the related analytics result on the any terminal;
sending, by the first communication device, a second request, where the second request includes the first information or second information corresponding to the first information, and the second request is used to request to discover index information of the target network element; and
receiving, by the first communication device, a second response, where the second response includes the index information of the target network element, and the index information is used by the first communication device to interact with the target network element or collect the related data on the any terminal from the target network element.

According to a second aspect, an information obtaining method is provided and includes:
receiving, by a second communication device, a third request, where the third request includes first information, the third request is used to request second information corresponding to the first information, the first information is used by a first communication device to determine a target network element corresponding to any terminal, and related data on the any terminal is used by the first communication device to determine a related analytics result on the any terminal; and
sending, by the second communication device, a third response, where the third response includes the second information, and the second information is used to discover the target network element corresponding to the any terminal.

According to a third aspect, a target information obtaining method is provided and includes:
receiving, by a third communication device, a second request, where the second request includes first information or second information corresponding to first information, the second request is used to discover index information of a target network element, the first information is used by a first communication device to determine a target network element corresponding to any terminal, related data on the any terminal is used by the first communication device to determine a related analytics result on the any terminal, and the second information is used to discover the target network element corresponding to the any terminal; and
sending, by the third communication device, a second response, where the second response includes the index information of the target network element, and the index information is used by the first communication device to interact with the target network element or collect the related data on the any terminal from the target network element.

According to a fourth aspect, an information obtaining method is provided and includes:
receiving, by a fourth communication device, a first query request, where the first query request includes first information, the first query request is used to request to query second information corresponding to the first information, the first information is used by a first communication device to determine a target network element corresponding to any terminal, and related data on the any terminal is used by the first communication device to determine a related analytics result on the any terminal; and
sending, by the fourth communication device, a first query response, where the first query response includes the second information.

According to a fifth aspect, a target information obtaining apparatus is provided and includes:
a first request receiving module, configured to receive a first request, where the first request is used to request a first communication device to provide a related analytics result on any terminal, the first request includes first information, the first information is used by the first communication device to determine a target network element corresponding to the any terminal, and related data on the any terminal is used by the first communication device to determine the related analytics result on the any terminal;
a second request sending module, configured to send a second request, where the second request includes the first information or second information corresponding to the first information, and the second request is used to request to discover index information of the target network element; and
a second response receiving module, configured to receive a second response, where the second response includes the index information of the target network element, and the index information is used by the first communication device to interact with the target network element or collect the related data on the any terminal from the target network element.

According to a sixth aspect, an information obtaining apparatus is provided and includes:
a third request receiving module, configured to receive a third request, where the third request includes first information, the third request is used to request second information corresponding to the first information, the first information is used by a first communication device to determine a target network element corresponding to any terminal, and related data on the any terminal is used by the first communication device to determine a related analytics result on the any terminal; and
a third response sending module, configured to send a third response, where the third response includes the second information, and the second information is used to discover the target network element corresponding to the any terminal.

According to a seventh aspect, a target information obtaining apparatus is provided and includes:
a second request receiving module, configured to receive a second request, where the second request includes first information or second information corresponding to first information, the second request is used to discover index information of a target network element, the first information is used by a first communication device to determine a target network element corresponding to any terminal, related data on the any terminal is used by the first communication device to determine a related analytics result on the any terminal, and the second information is used to discover the target network element corresponding to the any terminal; and
a second response sending module, configured to send a second response, where the second response includes the index information of the target network element, and the index information is used by the first communication device to interact with the target network element or collect the related data on the any terminal from the target network element.

According to an eighth aspect, an information obtaining apparatus is provided and includes:
a first query request receiving module, configured to receive a first query request, where the first query request includes first information, the first query request is used to request to query second information corresponding to the first information, the first information is used by a first communication device to determine a target network element corresponding to any terminal, and related data on the any terminal is used by the first communication device to determine a related analytics result on the any terminal; and
a first query response sending module, configured to send a first query response, where the first query response includes the second information.

According to a ninth aspect, a first communication device is provided and includes a processor and a memory. The memory stores a program or instructions capable of running on the processor. When the program or instructions are executed by the processor, the steps of the target information obtaining method according to the first aspect are implemented.

According to a tenth aspect, a second communication device is provided and includes a processor and a memory. The memory stores a program or instructions capable of running on the processor. When the program or instructions are executed by the processor, the steps of the information obtaining method according to the second aspect are implemented.

According to an eleventh aspect, a third communication device is provided and includes a processor and a memory. The memory stores a program or instructions capable of running on the processor. When the program or instructions are executed by the processor, the steps of the target information obtaining method according to the third aspect are implemented.

According to a twelfth aspect, a fourth communication device is provided and includes a processor and a memory. The memory stores a program or instructions capable of running on the processor. When the program or instructions are executed by the processor, the steps of the target information obtaining method according to the fourth aspect are implemented.

In the embodiments of this application, the first communication device obtains other parameters (that is, the first information) than critical parameters from the first request (that is, an analytics request) and sends the second request directly based on the first information, or finds the corresponding second information based on the first information and then sends the second request, to obtain the index information of the target network element by using the second request, thereby obtaining the index information of the target network element by using the other parameters than the critical parameters in the first request and ensuring effective obtaining of the index information of the target network element.

### BRIEF DESCRIPTION OF DRAWINGS

FIG. 1 is a block diagram of a wireless communication system to which an embodiment of this application may be applied;
FIG. 2 is a flowchart of a target information obtaining method according to an embodiment of this application;
FIG. 3 is a schematic diagram of implementation 1 according to an embodiment of this application;
FIG. 4 is a schematic diagram of an implementation of implementation 2 according to an embodiment of this application;
FIG. 5 is a schematic diagram of another implementation of implementation 2 according to an embodiment of this application;
FIG. 6 is a schematic diagram of implementation 3 according to an embodiment of this application;
FIG. 7 is a schematic diagram of implementation 4 according to an embodiment of this application;
FIG. 8 is a flowchart of an information obtaining method according to an embodiment of this application;
FIG. 9 is a flowchart of another target information obtaining method according to an embodiment of this application;
FIG. 10 is a flowchart of still another information obtaining method according to an embodiment of this application;
FIG. 11 is a schematic diagram of a target information obtaining apparatus according to an embodiment of this application;
FIG. 12 is a schematic diagram of an information obtaining apparatus according to an embodiment of this application;
FIG. 13 is a schematic diagram of another target information obtaining apparatus according to an embodiment of this application;
FIG. 14 is a schematic diagram of another information obtaining apparatus according to an embodiment of this application; and
FIG. 15 is a schematic diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6^{th} Generation, 6G) communication system.

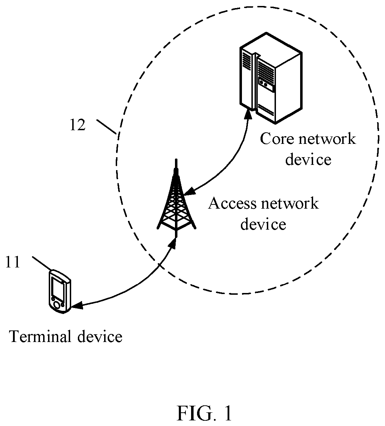

FIG. 1 is a block diagram of a wireless communication system to which an embodiment of this application may be applied. The wireless communication system includes a terminal device 11 and a network-side device 12. The terminal device 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal device 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

In the related art, to subscribe to or acquire an analytics result from an NWDAF, a 5G core network element or an NWDAF service subscriber needs to send an analytics request including critical parameters to the NWDAF first, so that the NWDAF discovers index information of a target network element from an NRF based on the critical parameters. Then the NWDAF can obtain or collect terminal related information from the target network element based on the index information of the target network element, and obtain the analytics result based on the terminal related information.

However, in the related art, the critical parameters used to discover the index information of the target network element are not mandatory parameters in the analytics request, that is, the analytics request sent by the 5G core network element may not include the critical parameters, and consequently, the NWDAF is unable to discover the index information of the target network element from the NRF. For example, for some non-critical parameters, the NRF does not support discovering the index information of the target network element by using the non-critical parameters.

To improve the related art, an embodiment of this application provides a technical solution capable of obtaining index information of a target network element based on other parameters than critical parameters in an analytics request, to overcome a disadvantage of the related art that the NWDAF is unable to obtain the index information of the target network element in a case that the analytics request does not include the critical parameters. A target information obtaining method provided in embodiments of this application is hereinafter described in detail by using some embodiments and application scenarios thereof with reference to the accompanying drawings.

For ease of description, various terms used in the embodiments of this application are first collectively described. (Unless otherwise stated, the following collective descriptions of various terms are applicable to various implementations of this application. Considering that individual terms first appear later, the individual terms are not collectively described herein, and the individual terms will be described when they first appear below.)

A first communication device may be one or more core network devices. For example, the first communication device may be an NWDAF, but is not limited to the NWDAF.

A second communication device is one or more core network devices. For example, the second communication device may be a NEF, but is not limited to the NEF.

A third communication device may be one or more core network devices. For example, the third communication device may be an NRF, but is not limited to the NRF.

A fourth communication device may be one or more core network devices. For example, the fourth communication device may be a UDR, but is not limited to the UDR.

In the embodiments of this application, the first communication device, the second communication device, the third communication device, and the fourth communication device may be any one of the foregoing core network devices, or may be any plurality of the foregoing core network devices.

A terminal, that is, user equipment (UE, User Equipment), may be the terminal device 11 in FIG. 1. For examples of the terminal device 11, refer to the foregoing description. Details are not described herein.

A target network element is a network element configured to collect related data on a terminal targeted by an analytics request (such as QoS (Quality of Service) information of the terminal accessing a server). In other words, the related data on the related terminal included in the analytics request can be obtained or collected through the target network element. The target network element includes at least one of the following:
an SMF; and
a UPF.

The target network element is one or more core network devices. For example, the target network element may be the SMF and/or the UPF, but is not limited to the SMF and/or the UPF.

Index information of the target network element is used for interaction between the first communication device and the target network element. The index information of the target network element includes at least one of the following:
an IP address of the target network element;
an FQDN of the target network element;
a port number of the target network element; and
an identifier ID of the target network element.

A first request is an analytics request sent by a 5G core network element (such as an NF) to the first communication device such as the NWDAF, for any terminal (that is, any UE). The analytics request does not include a critical parameter (such as a data network identifier DNN, a single network slice identifier S-NSSAI, or a data network access identifier DNAI).

First information is other parameters than critical parameters in the first request. The first information includes at least one of the following:
an application server IP address;
an application server port number;
an application server FQDN;
an application identifier (application identifier); and
a UPF anchor ID.

In the embodiments of this application, the UPF anchor ID may also be equivalently replaced with or represented by a UPF ID.

The first information does not include at least one of the following:
a data network identifier DNN;
a single network slice identifier S-NSSAI; and
a data network access identifier DNAI.

For example, the 5G core network element (such as the NF) or an NWDAF service subscriber of the first communication device sends a first request, where the first request includes the application server IP address, requesting to obtain an analytics result of OSE observation service experience of any terminal, and the any terminal is any terminal accessing the application server IP address. In this case, the first request does not include necessary information (that is, the critical parameters or second information) for discovering the target network element, but only includes the first information.

Depending on different first information, the first communication device obtains target information (that is, the index information of the target network element) in different manners. That the first communication device obtains the target information based on the application server IP address, the application server port number, the application server FQDN, or the application identifier (application identifier) corresponds to implementation 1 and implementation 4 below. In the case of the application identifier, there are other implementations in addition to the foregoing methods. That the first communication device obtains the application server IP address and/or the application server port number based on the application identifier (application identifier) and then obtains the target information corresponds to implementation 3 below. That the first communication device obtains the target information based on the UPF anchor ID corresponds to implementation 2 below.

The second information, that is, the foregoing critical parameters, corresponds to the first information. The second information includes at least one of the following:
a data network identifier DNN;
a single network slice identifier S-NSSAI; and
a data network access identifier DNAI.

For example, the application server IP address or the application server FQDN may be used to obtain the DNAI corresponding to the IP address or FQDN. The DNAI may be used to obtain the index information of the target network element.

A second request is a request sent by the first communication device and used to discover the index information such as the IP address, FQDN, or port number of the target network element. The second request may include the first information or the second information corresponding to the first information. The second information corresponding to the first information is obtained by using other communication devices (the second communication device to the fourth communication device in the following embodiment).

The second request may include the first information or the second information. Corresponding to implementation 4 below, in implementation 4, after receiving the first information, the third communication device such as the NRF may convert the first information (except the anchor ID) into the second information. In this case, the first communication device such as the NWDAF does not need to convert the first information (except the anchor ID) into the second information, but hands over the task of conversion to the NRF for completion.

The second request may also include the second information, which corresponds to implementation 1 and implementation 3 below. In implementation 1 and implementation 3, the first communication device such as the NWDAF needs to convert the first information into the second information. The second request is executed only after the second information is obtained.

A second response is a response received by the first communication device and corresponding to the second request. The second response includes the index information of the target network element.

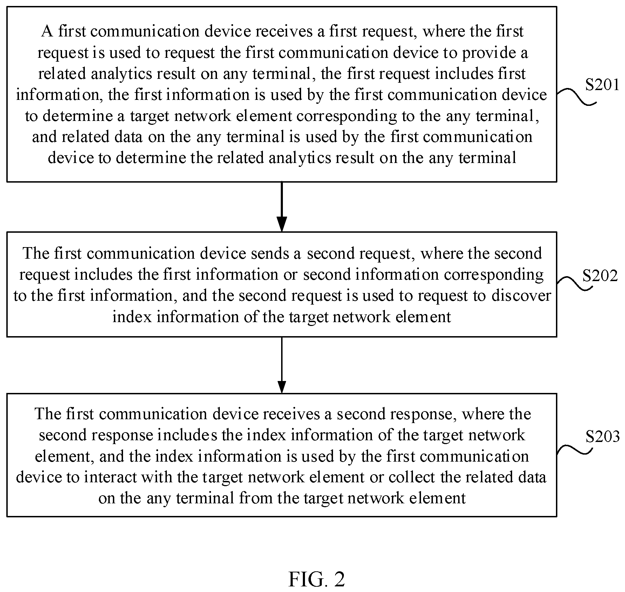

With reference to the foregoing central descriptions of various terms, according to a first aspect, a target information obtaining method is provided in an embodiment of this application. The method is applied to a first communication device. FIG. 2 is an implementation flowchart of the target information obtaining method according to this embodiment of this application. The method may include the following steps.

Step S201: The first communication device receives a first request, where the first request is used to request the first communication device to provide a related analytics result on any terminal, the first request includes first information, the first information is used by the first communication device to determine a target network element corresponding to the any terminal, and related data on the any terminal is used by the first communication device to determine the related analytics result on the any terminal.

Step S202: The first communication device sends a second request, where the second request includes the first information or second information corresponding to the first information, and the second request is used to request to discover index information of the target network element.

Step S203: The first communication device receives a second response, where the second response includes the index information of the target network element, and the index information is used by the first communication device to interact with the target network element or collect the related data on the any terminal from the target network element.

In a specific implementation, the first communication device receives an analytics request from a 5G core network element. If the analytics request includes critical parameters, the first communication device may directly obtain the index information of the target network element. For details, refer to the foregoing descriptions of the related art. If the analytics request is the first request that does not include critical parameters, the first communication device may convert, according to the technical solution provided in this embodiment of this application, the first information in the first request into the second information by using another communication device, to send the second request including the second information and receive the second response including the index information of the target network element. Alternatively, the first communication device directly sends the second request including the first information, thereby receiving the second response including the index information of the target network element. The first communication device receives the second response, that is, the index information of the target network element is obtained, so that the first communication device can further interact with the target network element to obtain the analytics result and return the analytics result to the 5G core network element.

In a possible implementation, the foregoing steps S202 and S203 are implemented through interaction between the first communication device and a third communication device. In other words, that the first communication device sends a second request includes: the first communication device receives the second request sent by the third communication device; and that the first communication device receives a second response includes: the first communication device receives the second request sent by the third communication device. This corresponds to implementation 1, implementation 3, and implementation 4 below.

The third communication device such as an NRF stores the index information of the target network element. The first communication device such as an NWDAF may acquire the index information of the target network element by sending the second request to the NRF and receiving the response returned by the NRF.

As can be learned from the foregoing steps S201 to S203, in this embodiment of this application, the first communication device obtains other parameters (that is, the first information) than critical parameters from the first request (that is, the analytics request) and sends the second request directly based on the first information, or finds the corresponding second information based on the first information and then sends the second request, to obtain the index information of the target network element by using the second request, thereby obtaining the index information of the target network element by using the other parameters than the critical parameters in the first request and ensuring effective obtaining of the index information of the target network element.

### Implementation 1

In this implementation, in a case that the first information is an application server IP address, an application server port number, an application server FQDN, or an application identifier (application identifier), the first communication device converts the first information into the second information such as a DNN, an S-NSSAI, or a DNAI through the following implementation, and then queries and obtains the index information of the target network element by using the second information.

In this implementation, in a case that the first communication device receives the first request, the first communication device first determines whether the first request includes the second information such as the DNN, the S-NSSAI, and the DNAI. If none of the foregoing in the second information is included, the first communication device determines that the second request cannot be executed, or the first communication device determines not to execute the second request first. A reason is that without the second information, the index information of the target network element cannot be obtained by using the second request. Then the first communication device determines whether the first request includes the first information, such as the application server IP address and the application server FQDN. If yes, the first communication device may trigger a third request for obtaining the second information corresponding to the first information. The second information may be used in the second request to obtain the index information of the target network element.

The first request may be at least one piece of the following signaling:
Nnwdaf_AnalyticsInfo_Request, analytics information request; and
Nnwdaf_AnalyticsSubscription_Subscribe, analytics subscription.

The second request may be one piece of the following signaling:
Nnrf_NFDiscovery_Request.

The second request is used to discover the target network element such as an SMF or a UPF.

In this implementation, in a case that the first communication device receives the first request including the first information, the first communication device may obtain the second information by performing steps of sending a third request and receiving a third response before performing the foregoing step S202. Specifically, the step of sending a third request by the first communication device is: the first communication device sends the third request, where the third request includes the first information, and the third request is used to request to obtain the second information corresponding to the first information; and the step of receiving a third response by the first communication device is: the first communication device receives the third response, where the third response includes the second information.

The third request may be used by the first communication device to directly obtain the second information from a fourth communication device UDR, and specific signaling thereof includes at least one of the following:
Nudr_DM_Query request, where the signaling includes the first information and is used to query the second information corresponding to the first information.

In a possible implementation, the steps of sending a third request and receiving a third response by the first communication device are implemented through interaction with a second communication device. In other words, that the first communication device sends a third request includes: the first communication device sends the third request to the second communication device; and that the first communication device receives a third response includes: the first communication device receives the third response sent by the second communication device. This corresponds to implementation 1 and implementation 3 below.

The third request may be used by the first communication device to request to obtain the second information from the second communication device NEF, and specific signaling thereof includes at least one of the following:
Nnef_DNAI_Fetch or the like.

Correspondingly, in response to the third request sent by the first communication device, the second communication device performs steps of sending a first query request and receiving a first query response. It may be understood that, in a case that the second communication device stores the second information corresponding to the first information, the second communication device may directly send the first query response without sending the first query request. In a possible implementation, the steps of sending a first query request and receiving a first query response by the second communication device are implemented through interaction with the fourth communication device. For details, refer to the following description of an information obtaining method performed by the second communication device.

After the second communication device such as the NEF receives the third request, in a case that the second communication device locally stores the second information corresponding to the first information, the second communication device may not execute the first query request, but directly send the third response to the first communication device.

For example, the first communication device sends, to the second communication device NEF, Nnef_DNAI_Fetch used to obtain the second information corresponding to the first information (for example, the DNAI corresponding to the application server IP address), and the second communication device NEF just locally stores the second information corresponding to the first information. In this case, the second communication device does not need to trigger interaction with the fourth communication device UDR, for example, does not execute the first query request, but directly sends the third response Nnef_DNAI_Fetch response to the first communication device NWDAF. The third response includes the second information corresponding to the first information.

The first query request may be Nudr_DM_Query request. The signaling includes the first information and is used to query the second information corresponding to the first information.

The first query response may be Nudr_DM_Query response, and the signaling includes the second information corresponding to the first information.

The fourth communication device (that is, the UDR) stores the second information corresponding to the first information. The first communication device such as the NWDAF queries the UDR for the second information corresponding to the first information through the second communication device such as the NEF.

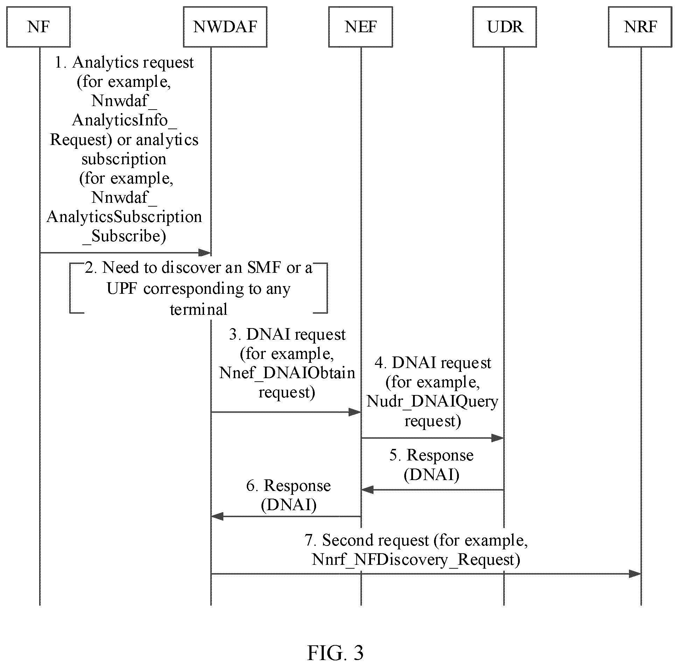

With reference to FIG. 3, the following describes implementation 1, assuming that the second information is the DNAI.

As shown in FIG. 3, a plurality of communication devices involved in implementation 1 are the 5G core network element (for example, an NF in FIG. 3), the NWDAF, the NEF, the UDR, and the NRF. Interaction between the communication devices includes the following steps.
1. The 5G core network element sends an analytics request to the NWDAF, where the analytics request may include first information or critical parameters. For example, as shown in FIG. 3, the NF sends an analytics subscription or an analytics obtaining request to the NWDAF, where the request includes the first information. The analytics request is for any UE.
2. The first communication device receives the analytics request, parses the analytics request, determines that the analytics request is used to request the first communication device to provide a related analytics result on any terminal, and triggers step 3 in a case that the analytics request is a first request including the first information. It may be understood that, in a case that the first analytics request includes the critical parameters, the first communication device may directly obtain index information of a target network element (that is, directly perform steps 7 and 8 in FIG. 3) by using the critical parameters without triggering step 3, to further convert the first information into second information. For example, as shown in FIG. 3, the NWDAF receives the analytics request, parses the analytics request, determines that the analytics request is used to request the first communication device to provide the related analytics result on the any terminal, and triggers step 3 in the case that the analytics request is the first request including the first information.
3. The first communication device sends a third request, where the third request includes the first information and the third request is used to request the second information corresponding to the first information. For example, as shown in FIG. 3, the NWDAF sends a DNAI obtaining request. Specifically, the NWDAF sends the DNAI obtaining request to the NEF. Alternatively, the NWDAF directly sends the DNAI obtaining request to the UDR (this situation is not shown in FIG. 3). The DNAI obtaining request includes the first information, such as the application server IP address.
4. After receiving the third request, the second communication device sends a first query request, where the first query request includes the first information, and the first query request is used to request to query the second information corresponding to the first information. For example, as shown in FIG. 3, the NEF sends a DNAI obtaining request. Specifically, the NEF sends the DNAI obtaining request to the UDR. Certainly, if the NEF directly stores the second information corresponding to the first information, the NEF does not execute the first query request, but directly sends, to the NWDAF, the second information corresponding to the first information.
5. The fourth communication device sends a first query response, where the first query response includes the second information. For example, as shown in FIG. 3, the UDR sends a response to the NEF, where the response includes the second information corresponding to the first information, such as the DNAI corresponding to the application server IP address.
6. The second communication device sends a first query response, where the first query response includes the second information. For example, as shown in FIG. 3, the NEF sends a response to the NWDAF, where the response includes the DNAI. It may be understood that, in a case that the NEF stores the DNAI corresponding to the first information (for example, the NEF stores the DNAI corresponding to the first information after querying the UDR for the DNAI corresponding to the first information for the first time), the NEF directly sends a response to the NWDAF, and the NEF does not need to execute the first query request in step 4, and correspondingly, the UDR does not need to perform step 5.
7. Through steps 3 to 6, the first communication device converts the first information into the second information. In this case, the first communication device sends a second request including the second information, to request to discover the index information of the target network element. For example, as shown in FIG. 3, the UDR sends a second request including the DNAI to the NRF.
8. The first communication device receives a second response, where the second response includes the index information of the target network element. For example, the UDR receives a response returned by the NRF, where the response includes the index information of the target network element. The index information of the target network element includes an IP address, an ID, or the like of the target network element.

Steps 7 and 8 are similar to a process of obtaining index information of a target network element by using critical parameters (such as a DNAI) in the related art, and are not described herein.

In addition, in a case that the first information is the application server FQDN, when the application server FQDN is converted into the DNAI, the application server IP address corresponding to the FQDN may be obtained first by using an EASDF, and then the application server IP address may be converted into the DNAI based on the foregoing implementation 1.

It may be understood that, when the second information is the DNN or the S-NSSAI, a process of converting the first information into the DNN or the S-NSSAI by the first communication device is similar to the foregoing process of converting the first information into the DNAI. Details are not described herein again.

### Implementation 2

This implementation is an implementation of obtaining index information of an SMF and/or a UPF in a case that the first information is a UPF anchor ID and that the target network element includes the SMF and/or the UPF. In implementation 2, the first communication device may further perform the following steps:
the first communication device determines, based on the UPF anchor ID, a UPF and/or index information of a UPF corresponding to the UPF anchor ID, where the UPF corresponding to the UPF anchor ID stores index information of an associated SMF;
the first communication device sends a fifth request, where the fifth request includes the UPF anchor ID, and the fifth request is used to request the index information of the SMF associated with the UPF corresponding to the UPF anchor ID; and
the first communication device receives a fifth response, where the fifth response includes the index information of the SMF associated with the UPF corresponding to the UPF anchor ID.

In a possible implementation, the steps of sending a fifth request and receiving a fifth response by the first communication device are implemented through interaction with the UPF corresponding to the UPF anchor ID. In other words, that the first communication device sends a fifth request includes: the first communication device sends the fifth request to the UPF corresponding to the UPF anchor ID; and that the first communication device receives a fifth response includes: the first communication device receives the fifth response sent by the UPF corresponding to the UPF anchor ID.

The fifth request may include a piece of indication information, where the indication information is used to indicate provisioning of index information of all SMFs associated with the UPF; or the indication information is used to indicate provisioning of index information of all SMFs that control the UPF.

The fifth request may further include a network function (NF) instance. For example, if the fifth request declares that the requested network function instance is an SMF, the fifth request is used to request a UPF to provide index information of all SMFs associated with the UPF.

In a specific implementation, the first communication device first determines, based on the UPF anchor ID, the UPF and/or the index information of the UPF corresponding to the UPF anchor ID. If the first communication device cannot determine, merely based on the UPF anchor ID, the UPF and/or the index information of the UPF corresponding to the UPF anchor ID, the first communication device may request, based on the UPF anchor ID, the third communication device (NRF) to query the UPF and/or the index information of the UPF corresponding to the UPF anchor ID. Certainly, this process may also be omitted, that is, the fifth request may also be sent only based on the UPF anchor ID.

After determining the UPF corresponding to the UPF anchor ID, the first communication device may send the fifth request to the UPF, and receive the fifth response returned by the UPF to obtain the index information of the SMF associated with the UPF.

For example, the fifth request may be Nupf_EventExposure Subscribe, used to obtain the index information of all the SMFs that control the UPF, such as SMF IP addresses and SMF IDs.

In another case, the first communication device NWDAF sends the fifth request to the NRF, where the fifth request is used to request to retrieve or obtain, from the NRF, the index information of all the SMFs associated with the UPF anchor ID.

The fifth response may be Nupf_EventExposure Notify or Nnrf_NFDiscovery_Response. The fifth response is sent to the first communication device NWDAF. The fifth response includes IP addresses, FQDNs, SMF IDs, or the like of all the SMFs associated with the UPF anchor ID or controlling the UPF anchor ID.

In a specific implementation, it is possible that some UPFs cannot directly interact with the first communication device. To avoid communication resource waste caused by unnecessary sending of the fifth request, before the first communication device sends the fifth request, the first communication device needs to determine whether the UPF corresponding to the UPF anchor ID supports direct interaction with the first communication device. Therefore, the first communication device needs to send a request including the UPF anchor ID to the third communication device (that is, the NRF). The first communication device sends the fifth request to the UPF corresponding to the UPF anchor ID only after receiving a response returned by the NRF, where the response indicates that the UPF corresponding to the UPF anchor ID supports interaction with the first communication device, and then the first communication device receives the fifth response returned by the UPF corresponding to the UPF anchor ID.

In a specific implementation, depending on whether the UPF supports direct interaction with the first communication device, implementation 2 may be divided into the following two implementations.

### Implementation 2-1

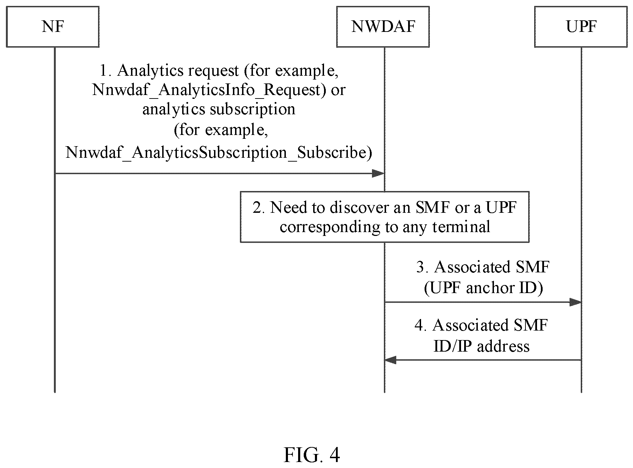

In implementation 2-1, any UPF can directly interact with the first communication device. The following describes implementation 2-1 with reference to FIG. 4.

As shown in FIG. 4, a plurality of communication devices involved in implementation 2-1 are the 5G core network element (for example, an NF in FIG. 4), the NWDAF, and the UPF. In this implementation, the UPF is both the target network element and a communication device, and the NWDAF obtains the index information of the target network element (that is, the SMF associated with the UPF) through the UPF. Interaction between the communication devices includes the following steps.
1. The 5G core network element sends an analytics request to the NWDAF, where the analytics request may include first information or critical parameters. For example, as shown in FIG. 4, the NF sends an analytics subscription or an analytics obtaining request to the NWDAF, where the request includes the first information.
2. The first communication device receives the analytics request, parses the analytics request, determines that the analytics request is used to request the first communication device to provide a related analytics result on any terminal, and triggers step 3 in a case that the analytics request is a first request including the first information. It may be understood that, in a case that the first analytics request includes the critical parameters, the first communication device may directly obtain index information of a target network element by using the critical parameters without triggering step 3, to further convert the first information into second information. For example, as shown in FIG. 4, the NWDAF receives the analytics request, parses the analytics request, determines that the analytics request is used to request the first communication device to provide the related analytics result on the any terminal, and triggers step 3 in the case that the analytics request is the first request including the first information.
3. The first communication device determines, based on the UPF anchor ID, the UPF corresponding to the UPF anchor ID. Then the first communication device sends a fifth request, where the fifth request includes the UPF anchor ID, and the fifth request is used to request the index information of the SMF associated with the UPF corresponding to the UPF anchor ID. For example, as shown in FIG. 4, the NWDAF requests, from the UPF corresponding to the UPF anchor ID, the index information of the SMF associated with the UPF.
4. The UPF corresponding to the UPF anchor ID sends a fifth response to the first communication device, and the first communication device receives the fifth response, where the fifth response includes the index information of the SMF associated with the UPF. For example, as shown in FIG. 4, the UPF corresponding to the UPF anchor ID sends, to the NWDAF, an ID or IP address of the SMF associated with the UPF.

### Implementation 2-2

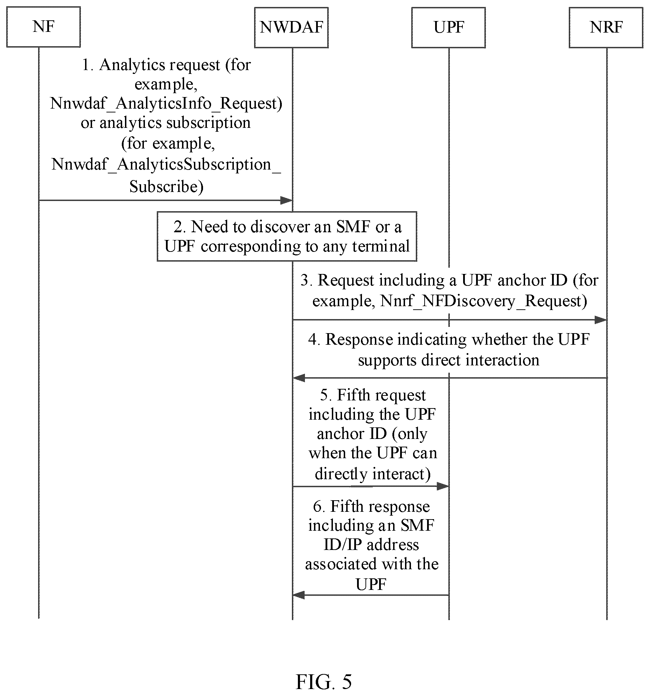

In implementation 2-2, some UPFs cannot directly interact with the first communication device. As described above, in this case, the first communication device needs to confirm, through the NRF, whether the UPF corresponding to the UPF anchor ID supports interaction with the first communication device. The first communication device sends the fifth request to the UPF corresponding to the UPF anchor ID and then receives the fifth response returned by the UPF corresponding to the UPF anchor ID, only under a condition that the NRF confirms that the UPF corresponding to the UPF anchor ID supports interaction with the first communication device. The following describes implementation 2-2 with reference to FIG. 5.

As shown in FIG. 5, a plurality of communication devices involved in implementation 2-2 are the 5G core network element (for example, an NF in FIG. 5), the NWDAF, the UPF, and the NRF. Similar to implementation 2-1, in this implementation, the UPF is both the target network element and a communication device, and the NWDAF obtains the index information of the target network element (that is, the SMF associated with the UPF) through the UPF. Interaction between the communication devices includes steps 1 to 6, where steps 1 and 2 in FIG. 5 are the same as steps 1 and 2 in FIG. 4 and are not described herein again. The following describes steps 3 to 6 in FIG. 5.

3. The first communication device sends a request including the UPF anchor ID to the NRF. For example, as shown in FIG. 5, the NWDAF sends a request including the UPF anchor ID to the NRF.

4. The third communication device (that is, the NRF) sends a response to the first communication device, and the first communication device receives the response, where the response indicates whether the UPF corresponding to the UPF anchor ID supports direct interaction with the first communication device. For example, as shown in FIG. 4, the NWDAF receives the response sent by the NRF. Step 5 is triggered only in a case that the response indicates that the UPF corresponding to the UPF anchor ID supports direct interaction with the first communication device.

5. Same as step 3 in FIG. 4.

6. Same as step 4 in FIG. 4.

### Implementation 3

This implementation is a process of converting an application identifier (application identifier) into the second information in a case that the first information is the application identifier (application identifier). It may be understood that the application identifier is actually one or more sets of flow detection rules PFDs (the PFD may also be referred to as a data packet flow description, a packet flow descriptor, a packet flow description, or the like) corresponding to an application. Each PFD includes one or more application server IP addresses or port numbers (mainly an IP triplet: destination IP address + port number). Therefore, the application identifier can also be converted into the second information (for example, a DNAI).

Therefore, the first communication device can directly request to obtain the corresponding second information based on the application identifier in the first information (corresponding to the foregoing implementation 1). It is also possible to find one or more PFDs corresponding to application identifiers, then obtain one or more application server IP addresses from the one or more PFDs, and then use these application server IP addresses to trigger the third request to obtain the corresponding second information (corresponding to this implementation).

The process of converting the application identifier (application identifier) into the second information specifically includes two sub-processes: a first sub-process of obtaining the application server IP address and/or the application server port number based on the application identifier (application identifier), and a second sub-process of converting the application server IP address and/or the application server port number into the second information. For the second sub-process, refer to the foregoing implementation 1. The following mainly describes the first sub-process.

In the case that the first information is the application identifier (application identifier), before performing the foregoing step S202, the first communication device may further obtain the second information by performing steps of sending at least one third request and receiving at least one third response. Specifically, the step of sending at least one third request by the first communication device is: the first communication device sends the at least one third request, where each third request includes at least one server IP address and/or server port number determined based on the application identifier (application identifier), and each third request is used to request second information corresponding to one server IP address and/or server port number; and the step of receiving at least one third response by the first communication device is: the first communication device receives the at least one third response, where each third response includes second information corresponding to one server IP address and/or server port number.

Similar to implementation 1, in a possible implementation, the steps of sending a third request and receiving a third response by the first communication device are implemented through interaction with a second communication device. A difference lies in that, in implementation 3, there are at least one third request and at least one third response because at least one server IP address and/or server port number is determined by using the application identifier (application identifier). In addition, the third request may also support obtaining second information corresponding to one or more application server IP addresses and/or application server port numbers at one time. For example, second information corresponding to one or more application server IP addresses and/or application server port numbers may be obtained by using only one third request, instead of using a plurality of third requests, where each third request includes only one application server IP address and/or application server port number.

In a possible implementation, before performing the step of sending at least one third request in this implementation, the first communication device may further perform steps of sending a fourth request and receiving a fourth response, to determine at least one server IP address and/or server port number by using the application identifier (application identifier). Specifically, the step of sending a fourth request by the first communication device is: the first communication device sends the fourth request, where the fourth request includes the application identifier (application identifier), and the fourth request is used to obtain a data packet flow descriptor PFD corresponding to the application identifier (application identifier); and the step of receiving a fourth response by the first communication device is: the first communication device receives the fourth response, where the fourth response includes the data packet flow descriptor PFD corresponding to the application ID, and the data packet flow descriptor PFD includes at least one of the following: one or more server IP addresses and/or server port numbers.

In a possible implementation, the steps of sending a fourth request and receiving a fourth response by the first communication device are implemented through interaction with the second communication device. In other words, that the first communication device sends a fourth request includes: the first communication device sends the fourth request to the second communication device; and that the first communication device receives a fourth response includes: the first communication device receives the fourth response sent by the second communication device.

For example, the fourth request sent by the first communication device to the second communication device may be:
Nnef_PFDManagement_Fetch request, PFD obtaining request; and
the fourth response received by the first communication device from the second communication device may be:
   Nnef_PFDManagement_Fetch response, PFD obtaining response. Correspondingly, in response to the fourth request sent by the first communication device, the second communication device performs steps of sending a second query request and receiving a second query response. It may be understood that, in a case that the second communication device stores at least one server IP address and/or server port number determined by using the application identifier (application identifier), the second communication device may directly send the fourth response without sending the second query request. In a possible implementation, the steps of sending a second query request and receiving a second query response by the second communication device are implemented through interaction with a fourth communication device. For details, refer to the following description of an information obtaining method performed by the second communication device.

The second communication device also needs to send the second query request to the fourth communication device UDR. The second query request may be:
Nudr_DM_Query request, data management query request.

The second query response received by the second communication device from the fourth communication device may be:
Nudr_DM_Query response, data management query response.

The fourth communication device (that is, the UDR) stores the PFD corresponding to the application identifier (application identifier), and the NWDAF queries the UDR for the PFD corresponding to the application identifier through the NEF, and then determines at least one server IP address and/or server port number from the found PFD. In this way, the foregoing first sub-process is completed.

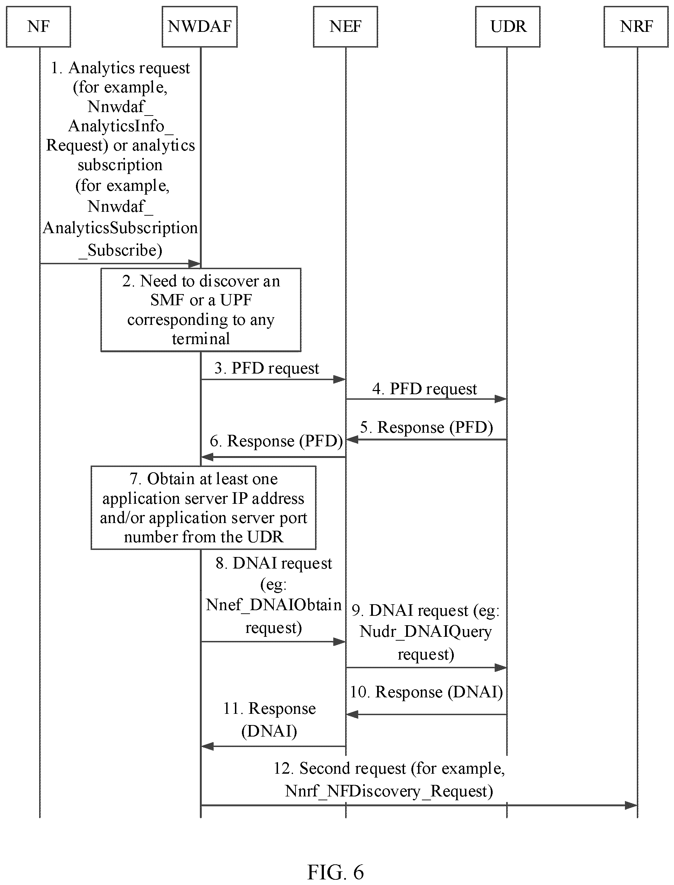

With reference to FIG. 6, the following describes implementation 3, assuming that the second information is the DNAI.

As shown in FIG. 6, a plurality of communication devices involved in implementation 1 are the 5G core network element (for example, an NF in FIG. 6), the NWDAF, the NEF, the UDR, and the NRF. Interaction between the communication devices includes the following steps.
1. Same as step 1 in FIG. 3.
2. Similar to step 2 in FIG. 3. The first communication device receives the analytics request, parses the analytics request, determines that the analytics request is used to request the first communication device to provide a related analytics result on any terminal, and triggers step 3 in a case that the analytics request is a first request including the first information. It may be understood that, in a case that the first analytics request includes the critical parameters, the first communication device may directly obtain index information of a target network element (that is, directly perform steps 12 and 13 in FIG. 6) by using the critical parameters without triggering step 3, to further convert the first information into second information. For example, as shown in FIG. 6, the NWDAF receives the analytics request, parses the analytics request, determines that the analytics request is used to request the first communication device to provide the related analytics result on the any terminal, and triggers step 3 in the case that the analytics request is the first request including the first information.
3. The first communication device sends a fourth request, where the fourth request includes an application identifier (application identifier), and the fourth request is used to obtain a data packet flow descriptor PFD corresponding to the application identifier (application identifier). For example, as shown in FIG. 6, the NWDAF sends a PFD request. Specifically, the NWDAF sends the PFD request to the NEF.
4. The second communication device sends a second query request, where the second query request includes the application identifier (application identifier), and the second query request is used to obtain the data packet flow descriptor PFD corresponding to the application identifier (application identifier). For example, as shown in FIG. 6, the NEF sends a PFD request. Specifically, the NEF sends the PFD request to the UDR. If the second communication device already has the PFD corresponding to the first information application identifier, the second communication device may directly send a fourth response in step 6 without executing the second query request.
5. The fourth communication device sends a second query response, where the second query response includes the data packet flow descriptor PFD corresponding to the application identifier (application identifier). For example, as shown in FIG. 6, the UDR sends a response to the NEF, where the response includes the data packet flow descriptor PFD corresponding to the application identifier (application identifier).
6. The second communication device sends a fourth response, where the fourth response includes the data packet flow descriptor PFD corresponding to the application identifier (application identifier). For example, as shown in FIG. 6, the NEF sends a response to the NWDAF, where the response includes the data packet flow descriptor PFD corresponding to the application identifier (application identifier). It may be understood that, in a case that the NEF stores the data packet flow descriptor PFD corresponding to the application identifier (application identifier) (for example, the NEF stores the PFD after querying the UDR for the data packet flow descriptor PFD corresponding to the application identifier (application identifier) for the first time), the NEF directly sends the response to the NWDAF, and the NEF does not need to perform step 4, and correspondingly, the UDR does not need to perform step 5.
7. Through steps 3 to 6, the first communication device queries the UDR for the PFD corresponding to the application identifier through the NEF, and then determines at least one server IP address and/or server port number from the found PFD. In this way, the first sub-process of obtaining the application server IP address and/or the application server port number based on the application identifier (application identifier) is completed. For example, as shown in FIG. 6, the NWDAF receives the response sent by the NEF, and determines the at least one server IP address and/or server port number from the PFD included in the response. In other words, the NWDAF obtains at least one piece of first information.

Steps 8 to 11 are similar to steps 3 to 6 in FIG. 3. Through steps 8 to 11, the first communication device converts the at least one piece of first information into at least one piece of second information.

Steps 12 and 13 are similar to steps 7 and 8 in FIG. 3. The first communication device obtains the index information of the target network element by using the second information (that is, the critical parameters). For details, refer to the related art. Details are not described herein.

It may be understood that, when the second information is a DNN or an S-NSSAI, a process of converting the first information into the DNN or the S-NSSAI by the first communication device is similar to the foregoing process of converting the first information into the DNAI. Details are not described herein again.

### Implementation 4

In this implementation, in a case that the second request includes the first information, the first information is converted into the second information by the third communication device (that is, the NRF), and the index information of the target network element discovered based on the second information is returned to the first communication device.

In this implementation, in a case that the first communication device receives the first request including the first information, the first communication device does not first interact with the second communication device (NEF) as in implementation 1 or implementation 3 and then query a fourth communication device (UDR) for the second information corresponding to the first information. Instead, the first communication device directly interacts with the third communication device (that is, the NRF). The third communication device converts the first information into the second information, and the third communication device queries target information based on the second information. The first communication device only needs to receive the target information returned by the third communication device.

In this implementation, in the case that the first communication device receives the first request including the first information, the first communication device may directly perform the foregoing step S202 (that is, send the second request including the first information), and then perform step S203 (that is, receive the second response). As described above, the foregoing steps S202 and S203 are implemented through interaction between the first communication device and the third communication device.

Correspondingly, in response to the second request including the first information and sent by the first communication device, the third communication device performs the steps of sending a request to the second communication device and receiving a response returned by the second communication device, to obtain the second information corresponding to the first information. Then the third communication device discovers the index information of the target network element based on the second information corresponding to the first information, and returns the index information of the target network element to the first communication device.

Correspondingly, a manner in which the second communication device processes the request sent by the third communication device is the same as the manner in which the first request sent by the first communication device (implementation 1 and implementation 3) is processed. The processing manner is: performing the steps of sending a first query request to the fourth communication device (that is, the UDR) and receiving a first query response. For details, refer to the following description of an information obtaining method performed by the second communication device.

The fourth communication device (that is, the UDR) stores the second information corresponding to the first information, and the NRF queries the UDR for the second information corresponding to the first information through the NEF. Then the NRF discovers the index information of the target network element based on the second information and returns the index information of the target network element to the first communication device.

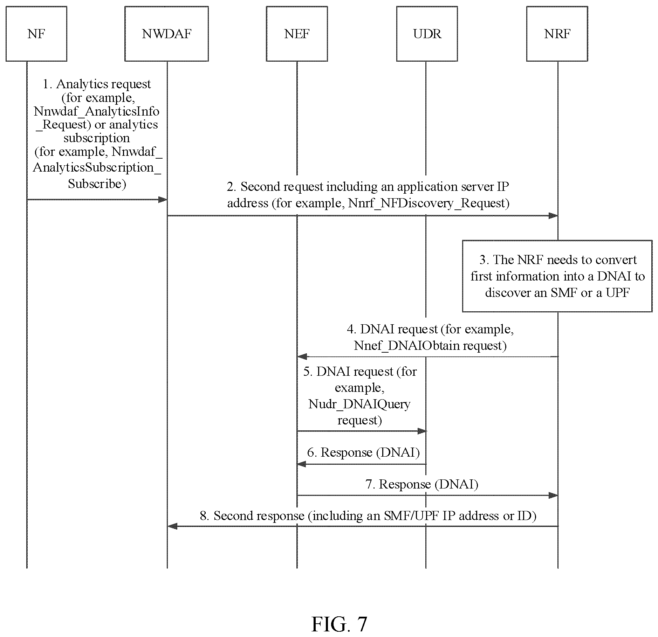

With reference to FIG. 7, the following describes implementation 4, assuming that the second information is a DNAI.

As shown in FIG. 7, a plurality of communication devices involved in implementation 4 are the 5G core network element (for example, an NF in FIG. 7), the NWDAF, the NEF, the UDR, and the NRF. Interaction between the communication devices includes the following steps.
1. Same as step 1 in FIG. 3.
2. The first communication device receives the analytics request, parses the analytics request, determines that the analytics request is used to request the first communication device to provide a related analytics result on any terminal, and sends a second request including the first information to the third communication device in a case that the analytics request is a first request including the first information. It may be understood that, in a case that the first analytics request includes critical parameters, the first communication device may directly obtain index information of a target network element by using the critical parameters without sending the second request including the first information to the third communication device to trigger the third communication device to convert the first information into second information. For example, as shown in FIG. 7, the NWDAF receives the analytics request, parses the analytics request, determines that the analytics request is used to request the first communication device to provide the related analytics result on the any terminal, and sends a second request including an application server IP address to the NRF in the case that the analytics request is the first request including the first information. In other words, after receiving the first request, the first communication device directly triggers the second request, instead of first obtaining the second information corresponding to the first information by using a third request. After the third communication device receives the second request, a third request is triggered to obtain the second information corresponding to the first information.
3. The third communication device parses the received second request including the first information, and determines that the third communication device needs to first convert the first information into the second information, or finds that the information included in the second request is the first information that cannot be directly used to discover the target network element. Therefore, the index information of the target network element can be discovered only after the second information is obtained. For example, as shown in FIG. 7, the NRF requires the DNAI, and can discover the index information of the target network element only by using the DNAI.
4. The third communication device sends a request, where the request includes the first information and the third request is used to request the second information corresponding to the first information. For example, as shown in FIG. 7, the NRF sends a DNAI obtaining request, that is, the third request. Specifically, the NRF sends the DNAI obtaining request to the NEF.
5. Same as step 4 in FIG. 3.
6. Same as step 5 in FIG. 3.
7. The second communication device sends a third response, where the response includes the second information. For example, as shown in FIG. 7, the NEF sends a response to the NRF, where the response includes the DNAI. It may be understood that, in a case that the NEF stores the DNAI corresponding to the first information (for example, the NEF stores the DNAI corresponding to the first information in the NEF after querying the UDR for the DNAI corresponding to the first information for the first time), the NEF directly sends a response to the NRF, and the NEF does not need to perform step 5, and correspondingly, the UDR does not need to perform step 6.
8. Through steps 4 to 7, the third communication device converts the first information into the second information. In this case, the third communication device discovers the index information of the target network element based on the second information, and then returns the index information of the target network element to the first communication device. For example, as shown in FIG. 7, the NRF returns the index information of the target network element to the NWDAF.

It may be understood that, when the second information is a DNN or an S-NSSAI, a process of converting the first information into the DNN or the S-NSSAI by the third communication device is similar to the foregoing process of converting the first information into the DNAI. Details are not described herein again. Similarly, the third communication device discovers the index information of the target network element based on the DNN or the S-NSSAI, and then returns the index information of the target network element to the first communication device.

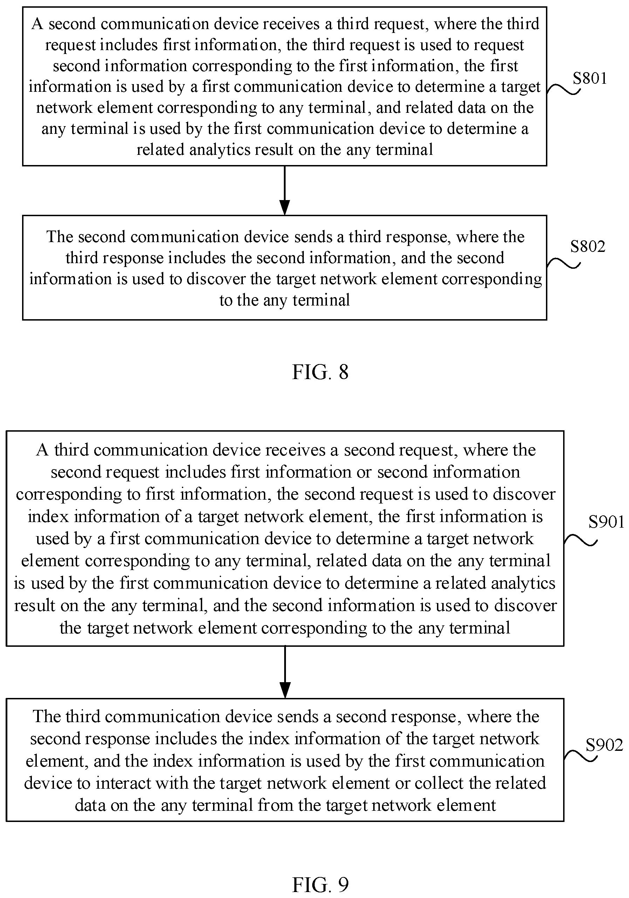

According to a second aspect, an information obtaining method is provided. The method is applied to a second communication device. FIG. 8 is an implementation flowchart of the information obtaining method according to this embodiment of this application. The method includes at least the following steps.

Step S801: The second communication device receives a third request, where the third request includes first information, the third request is used to request second information corresponding to the first information, the first information is used by a first communication device to determine a target network element corresponding to any terminal, and related data on the any terminal is used by the first communication device to determine a related analytics result on the any terminal.

Step S802: The second communication device sends a third response, where the third response includes the second information, and the second information is used to discover the target network element corresponding to the any terminal.

For example, the third request may be at least one piece of the following signaling:
Nnef_DNAI_Fetch or the like.

A purpose of the third request is to obtain a DNAI, a DNN, an S-NSSAI, or the like corresponding to an application server IP address, an application server FQDN, an application identifier, or the like.

The third response may be Nnef_DNAI_Fetch response or the like. The third response includes the DNAI, the DNN, the S-NSSAI, or the like corresponding to the application server IP address, the application server FQDN, the application identifier, or the like.

As can be learned from the foregoing steps, in this embodiment of this application, the first communication device obtains other parameters (that is, the first information) than critical parameters from a first request and sends a second request based on the found second information corresponding to the first information or directly based on the first information, to obtain index information of the target network element by sending the second request, thereby obtaining the index information of the target network element by using the other parameters than the critical parameters in the first request and ensuring effective obtaining of the index information of the target network element.

Optionally, that the second communication device receives a third request includes: the second communication device receives the third request sent by the first communication device; and that the second communication device sends a third response includes: the second communication device sends the third response to the first communication device; or
that the second communication device receives a third request includes: the second communication device receives the third request sent by a third communication device; and that the second communication device sends a third response includes: the second communication device sends the third response to the third communication device.

Optionally, after the second communication device receives the third request, or before the second communication device sends the third response, the method further includes:
the second communication device sends a first query request, where the first query request includes the first information, and the first query request is used to request to query the second information corresponding to the first information, where
the first query request may be Nudr_DM_Query request, and the signaling includes the first information and is used to query the second information corresponding to the first information, for example, used to query the DNAI, the DNN, or the S-NSSAI corresponding to the application server IP address, the application server FQDN, or the application identifier; and
the second communication device receives a first query response, where the first query response includes the second information corresponding to the first information.

The first query response may be Nudr_DM_Query response, and the signaling includes the second information corresponding to the first information, for example, the obtained DNAI, DNN, or S-NSSAI corresponding to the application server IP address, the application server FQDN, or the application identifier.

Optionally, that the second communication device sends a third response includes:
in a case that the second communication device stores the second information corresponding to the first information, the second communication device directly sends the third response, or the second communication does not send the first query request.

Optionally, that the second communication device sends a first query request includes: the second communication device sends the first query request to a fourth communication device; and
that the second communication device receives a first query response includes: the second communication device receives the first query response sent by the fourth communication device.

Optionally, in a case that the first information is an application identifier (application identifier), that the second communication device receives a third request includes:
the second communication device receives at least one third request, where each third request includes at least one server IP address and/or server port number corresponding to the application identifier (application identifier), and each third request is used to request second information corresponding to one server IP address and/or server port number; and
that the second communication device sends a third response includes:
   the second communication device sends at least one third response, where each third response includes second information corresponding to one server IP address and/or server port number.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

Optionally, the second information includes at least one of the following:
a data network identifier DNN;
a single network slice identifier S-NSSAI; and
a data network access identifier DNAI.

Optionally, the target network element includes at least one of the following:
an SMF; and
a UPF.

Optionally, the index information of the target network element includes at least one of the following:
an IP address of the target network element;
an FQDN of the target network element;
a port number of the target network element; and
an identifier ID of the target network element.

Optionally, before the second communication device receives the at least one third request, the method further includes:
the second communication device receives a fourth request, where the fourth request includes the application identifier (application identifier), and the fourth request is used to obtain at least one data packet flow descriptor PFD corresponding to the application identifier (application identifier); and
the second communication device sends a fourth response, where the fourth response includes the at least one data packet flow descriptor PFD corresponding to the application ID, and the data packet flow descriptor PFD includes at least one of the following: one or more server IP addresses and/or server port numbers.

For example, the fourth request received by the second communication device may be:
Nnef_PFDManagement_Fetch request, PFD obtaining request; and
the fourth response sent by the second communication device may be:
   Nnef_PFDManagement_Fetch response, PFD obtaining response.

Optionally, after the second communication device receives the fourth request, or before the second communication device sends the fourth response, the method further includes:
the second communication device sends a second query request, where the second query request includes the application identifier (application identifier), and the second query request is used to request to query the at least one data packet flow descriptor PFD corresponding to the application identifier (application identifier); and
the second communication device receives a second query response, where the second query response includes the at least one data packet flow descriptor PFD corresponding to the application identifier (application identifier), and the data packet flow descriptor PFD includes at least one of the following: the one or more server IP addresses and/or server port numbers.

Optionally, that the second communication device receives at least one third request includes: the second communication device receives at least one third request sent by a fourth communication device;
that the second communication device sends at least one third response includes: the second communication device sends the at least one third response to the fourth communication device;
that the second communication device receives a fourth request includes: the second communication device receives the fourth request sent by the first communication device;
that the second communication device sends a fourth response includes: the second communication device sends the fourth response to the first communication device;
that the second communication device sends a second query request includes: the second communication device sends the second query request to the fourth communication device; and
that the second communication device receives a second query response includes: the second communication device receives the second query response sent by the fourth communication device.

The related steps of the foregoing information obtaining method correspond to implementations in the foregoing implementation 1 to implementation 4. Details are not described herein again.

According to a third aspect, a target information obtaining method is provided. The method is applied to a third communication device. FIG. 9 is an implementation flowchart of the target information obtaining method according to this embodiment of this application. The method includes at least the following steps.

Step S901: The third communication device receives a second request, where the second request includes first information or second information corresponding to first information, the second request is used to discover index information of a target network element, the first information is used by a first communication device to determine a target network element corresponding to any terminal, related data on the any terminal is used by the first communication device to determine a related analytics result on the any terminal, and the second information is used to discover the target network element corresponding to the any terminal.

Step S902: The third communication device sends a second response, where the second response includes the index information of the target network element, and the index information is used by the first communication device to interact with the target network element or collect the related data on the any terminal from the target network element.

The second request may be one piece of the following signaling:
Nnrf_NFDiscovery_Request.

The second request is used to discover the target network element such as an SMF or a UPF.

The second response may be one piece of the following signaling:
Nnrf_NFDiscovery_response, which carries an ID, an IP address, or the like of the target network element.

As can be learned from the foregoing steps, in this embodiment of this application, the first communication device obtains other parameters (that is, the first information) than critical parameters from a first request and sends the second request based on the found second information corresponding to the first information or directly based on the first information, to obtain the index information of the target network element by sending the second request, thereby obtaining the index information of the target network element by using the other parameters than the critical parameters in the first request and ensuring effective obtaining of the index information of the target network element.

Optionally, in a case that the second request is a second request including the first information, the method further includes:
the third communication device sends a third request, where the third request includes the first information, and the third request is used to request to obtain the second information corresponding to the first information; and
the third communication device receives a third response, where the third response includes the second information corresponding to the first information.

Optionally, that the third communication device sends a third request includes: the third communication device sends the third request to a second communication device; and
that the third communication device receives a third response includes: the third communication device receives the third response sent by the second communication device.

Optionally, that the third communication device receives a second request includes: the third communication device receives the second request sent by the first communication device; and
that the third communication device sends a second response includes: the third communication device sends the second response to the first communication device.

Optionally, before the third communication device sends the second response, the method further includes:
the third communication device discovers the index information of the target network element based on the second information.

Optionally, the second information includes at least one of the following:
a data network identifier DNN;
a single network slice identifier S-NSSAI; and
a data network access identifier DNAI.

Optionally, the target network element includes at least one of the following:
an SMF; and
a UPF.

Optionally, the index information of the target network element includes at least one of the following:
an IP address of the target network element;
an FQDN of the target network element;
a port number of the target network element; and
an identifier ID of the target network element.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

The related steps of the foregoing target information obtaining method correspond to implementations in the foregoing implementation 1 to implementation 4. Details are not described herein again.

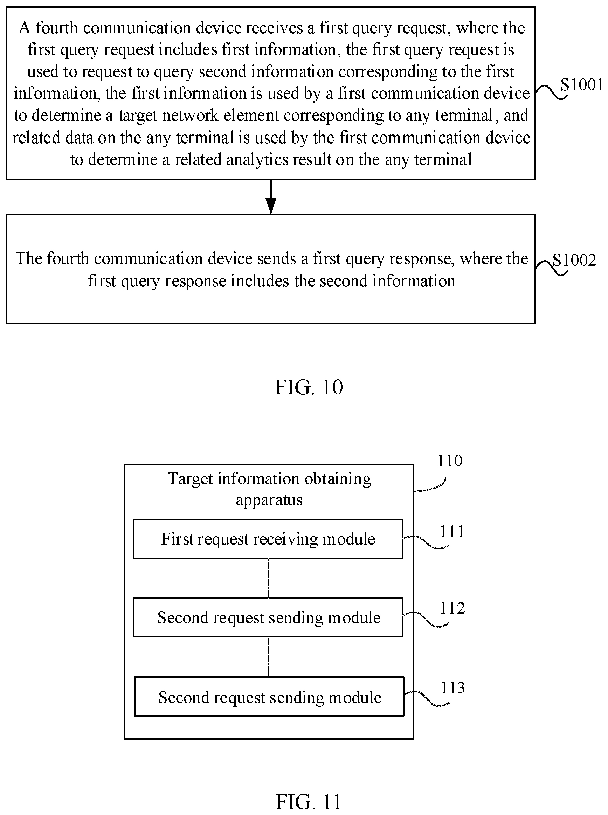

According to a fourth aspect, an information obtaining method is provided. The method is applied to a fourth communication device. FIG. 10 is an implementation flowchart of the information obtaining method according to this embodiment of this application. The method includes at least the following steps.

Step S1001: The fourth communication device receives a first query request, where the first query request includes first information, the first query request is used to request to query second information corresponding to the first information, the first information is used by a first communication device to determine a target network element corresponding to any terminal, and related data on the any terminal is used by the first communication device to determine a related analytics result on the any terminal.

Step S1002: The fourth communication device sends a first query response, where the first query response includes the second information.

As can be learned from the foregoing steps, in this embodiment of this application, the first communication device obtains other parameters (that is, the first information) than critical parameters from a first request and sends a second request based on the found second information corresponding to the first information or directly based on the first information, to obtain index information of the target network element by sending the second request, thereby obtaining the index information of the target network element by using the other parameters than the critical parameters in the first request and ensuring effective obtaining of the index information of the target network element.

Optionally, in a case that the first information is an application identifier (application identifier), before the fourth communication device receives the first query request, the method further includes:
the fourth communication device receives a second query request, where the second query request includes the application identifier (application identifier), and the second query request is used to request to query at least one data packet flow descriptor PFD corresponding to the application identifier (application identifier); and
the fourth communication device sends a second query response, where the second query response includes the at least one data packet flow descriptor PFD corresponding to the application identifier (application identifier), and the data packet flow descriptor PFD includes at least one of the following: one or more server IP addresses and/or server port numbers.

Optionally, that the fourth communication device receives a first query request includes:
the fourth communication device receives the first query request sent by a second communication device;
that the fourth communication device sends a first query response includes: the fourth communication device sends the first query response to the second communication device;
that the fourth communication device receives a second query request includes: the fourth communication device receives the second query request sent by the second communication device; and
that the fourth communication device sends a second query response includes: the fourth communication device sends the second query response to the second communication device.

Optionally, the second information includes at least one of the following:
a data network identifier DNN;
a single network slice identifier S-NSSAI; and
a data network access identifier DNAI.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

The related steps of the foregoing information obtaining method correspond to implementations in the foregoing implementation 1 to implementation 4. Details are not described herein again.

According to a fifth aspect, an embodiment of this application provides a target information obtaining apparatus. The apparatus may be applied to a first communication device. As shown in FIG. 11, the target information obtaining apparatus 110 includes:
a first request receiving module 111, configured to receive a first request, where the first request is used to request the first communication device to provide a related analytics result on any terminal, the first request includes first information, the first information is used by the first communication device to determine a target network element corresponding to the any terminal, and related data on the any terminal is used by the first communication device to determine the related analytics result on the any terminal;
a second request sending module 112, configured to send a second request, where the second request includes the first information or second information corresponding to the first information, and the second request is used to request to discover index information of the target network element; and
a second response receiving module 113, configured to receive a second response, where the second response includes the index information of the target network element, and the index information is used by the first communication device to interact with the target network element or collect the related data on the any terminal from the target network element.

Optionally, the apparatus further includes a third request sending module and a third response receiving module, where
the third request sending module is configured to send a third request, where the third request includes the first information, and the third request is used to request to obtain the second information corresponding to the first information; and
the third response receiving module is configured to receive a third response, where the third response includes the second information.

Optionally, in a case that the first information is an application identifier (application identifier), the third request sending module is specifically configured to send at least one third request, where each third request includes at least one server IP address and/or server port number corresponding to the application identifier and determined based on the application identifier (application identifier), and each third request is used to request second information corresponding to one server IP address and/or server port number; and
the third response receiving module is specifically configured to receive at least one third response, where each third response includes second information corresponding to one server IP address and/or server port number.

Optionally, the apparatus further includes a fourth request sending module and a fourth response receiving module, where
the fourth request sending module is configured to send a fourth request, where the fourth request includes the application identifier (application identifier), and the fourth request is used to obtain at least one data packet flow descriptor PFD corresponding to the application identifier (application identifier); and
the fourth response receiving module is configured to receive a fourth response, where the fourth response includes the at least one data packet flow descriptor PFD corresponding to the application ID, and the data packet flow descriptor PFD includes at least one of the following: one or more server IP addresses and/or server port numbers.

Optionally, the fourth request sending module is specifically configured to send the fourth request to a second communication device; and
the fourth response receiving module is specifically configured to receive the fourth response sent by the second communication device.

Optionally, the third request sending module is specifically configured to send the third request to a second communication device; and
the third response receiving module is specifically configured to receive the third response sent by the second communication device.

Optionally, the second request sending module is specifically configured to send the second request to a third communication device; and
the second response receiving module is specifically configured to receive the second response sent by the third communication device.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

Optionally, the second information includes at least one of the following:
a data network identifier DNN;
a single network slice identifier S-NSSAI; and
a data network access identifier DNAI.

Optionally, the target network element includes at least one of the following:
an SMF; and
a UPF.

Optionally, in a case that the target network element includes an SMF and/or a UPF and that the first information is a UPF anchor ID, the apparatus further includes a processing module, a fifth request sending module, and a fifth response receiving module, where
the processing module is configured to determine, based on the UPF anchor ID, a UPF and/or index information of a UPF corresponding to the UPF anchor ID, where the UPF corresponding to the UPF anchor ID stores index information of an associated SMF;
the fifth request sending module is configured to send a fifth request, where the fifth request includes the UPF anchor ID, and the fifth request is used to request the index information of the SMF associated with the UPF corresponding to the UPF anchor ID; and
the fifth response receiving module is configured to receive a fifth response, where the fifth response includes the index information of the SMF associated with the UPF corresponding to the UPF anchor ID.

Optionally, the index information of the target network element includes at least one of the following:
an IP address of the target network element;
an FQDN of the target network element;
a port number of the target network element; and
an identifier ID of the target network element.

The related steps performed by the foregoing target information obtaining apparatus correspond to implementations in the foregoing implementation 1 to implementation 4. Details are not described herein again.

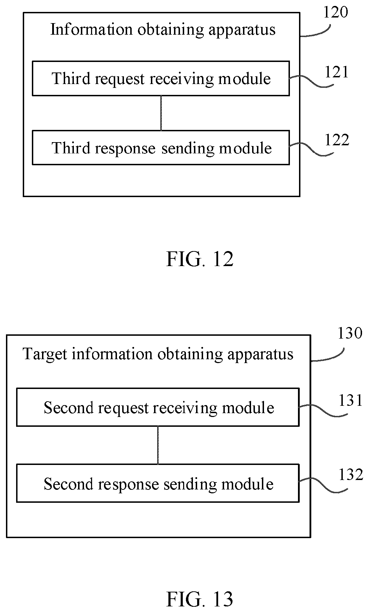

According to a sixth aspect, an embodiment of this application provides an information obtaining apparatus. The apparatus may be applied to a second communication device. As shown in FIG. 12, the information obtaining apparatus 120 includes:
a third request receiving module 121, configured to receive a third request, where the third request includes first information, the third request is used to request second information corresponding to the first information, the first information is used by a first communication device to determine a target network element corresponding to any terminal, and related data on the any terminal is used by the first communication device to determine a related analytics result on the any terminal; and
a third response sending module 122, configured to send a third response, where the third response includes the second information, and the second information is used to discover the target network element corresponding to the any terminal.

Optionally, the third request receiving module 121 is specifically configured to receive the third request sent by the first communication device; and
the third response sending module 122 is specifically configured to send the third response to the first communication device;
   or
the third request receiving module 121 is specifically configured to receive the third request sent by a third communication device; and
the third response sending module 122 is specifically configured to send the third response to the third communication device.

Optionally, the apparatus further includes a first query request sending module and a first query response receiving module, where
the first query request sending module is configured to send a first query request, where the first query request includes the first information, and the first query request is used to request to query the second information corresponding to the first information; and
the first query response receiving module is configured to receive a first query response, where the first query response includes the second information corresponding to the first information.

Optionally, in a case that the second communication device stores the second information corresponding to the first information, the third response sending module 122 is specifically configured to directly send the third response, or enable the first query request sending module to skip sending the first query request. Optionally, the first query request sending module is specifically configured to send the first query request to a fourth communication device; and
the first query response is specifically configured to receive the first query response sent by the fourth communication device.

Optionally, in a case that the first information is an application identifier (application identifier), the third request receiving module is specifically configured to receive at least one third request, where each third request includes at least one server IP address and/or server port number corresponding to the application identifier (application identifier), and each third request is used to request second information corresponding to one server IP address and/or server port number; and
in the case that the first information is the application identifier (application identifier), the third response sending module is specifically configured to send at least one third response, where each third response includes second information corresponding to one server IP address and/or server port number.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

Optionally, the second information includes at least one of the following:
a data network identifier DNN;
a single network slice identifier S-NSSAI; and
a data network access identifier DNAI.

Optionally, the target network element includes at least one of the following:
an SMF; and
a UPF.

Optionally, the index information of the target network element includes at least one of the following:
an IP address of the target network element;
an FQDN of the target network element;
a port number of the target network element; and
an identifier ID of the target network element.

Optionally, the apparatus further includes a fourth request receiving module and a fourth response sending module, where
the fourth request receiving module is configured to receive a fourth request, where the fourth request includes the application identifier (application identifier), and the fourth request is used to obtain at least one data packet flow descriptor PFD corresponding to the application identifier (application identifier); and
the fourth response sending module is configured to send a fourth response, where the fourth response includes the at least one data packet flow descriptor PFD corresponding to the application ID, and the data packet flow descriptor PFD includes at least one of the following: one or more server IP addresses and/or server port numbers.

Optionally, the apparatus further includes a second query request sending module and a second query response receiving module, where
the second query request sending module is configured to send a second query request, where the second query request includes the application identifier (application identifier), and the second query request is used to request to query the at least one data packet flow descriptor PFD corresponding to the application identifier (application identifier); and
the second query response receiving module is configured to receive a second query response, where the second query response includes the at least one data packet flow descriptor PFD corresponding to the application identifier (application identifier), and the data packet flow descriptor PFD includes at least one of the following: the one or more server IP addresses and/or server port numbers.

Optionally, the third request receiving module is further configured to receive at least one third request sent by a fourth communication device;
the third response sending module is further configured to send the at least one third response to the fourth communication device;
the fourth request receiving module is further configured to receive the fourth request sent by the first communication device;
the fourth response sending module is further configured to send the fourth response to the first communication device;
the second query request sending module is further configured to send the second query request to the fourth communication device; and
the second query response receiving module is further configured to receive the second query response sent by the fourth communication device.

The related steps performed by the foregoing information obtaining apparatus correspond to implementations in the foregoing implementation 1 to implementation 4. Details are not described herein again.

According to a seventh aspect, an embodiment of this application provides another target information obtaining apparatus. The apparatus may be applied to a third communication device. As shown in FIG. 13, the target information obtaining apparatus 130 includes:
a second request receiving module 131, configured to receive a second request, where the second request includes first information or second information corresponding to first information, the second request is used to discover index information of a target network element, the first information is used by a first communication device to determine a target network element corresponding to any terminal, the first communication device obtains related data on any terminal from the target network element, the related data on the any terminal is used by the first communication device to determine a related analytics result on the any terminal, and the second information is used to discover the target network element corresponding to the any terminal; and
a second response sending module 132, configured to send a second response, where the second response includes the index information of the target network element, and the index information is used by the first communication device to interact with the target network element or collect the related data on the any terminal from the target network element.

Optionally, in a case that the second request is a second request including the first information, the apparatus further includes a third request sending module and a third response receiving module, where
the third request sending module is configured to send a third request, where the third request includes the first information, and the third request is used to request to obtain the second information corresponding to the first information; and
the third response receiving module is configured to receive a third response, where the third response includes the second information corresponding to the first information.

Optionally, the third request sending module is specifically configured to send the third request to a second communication device; and
the third response receiving module is specifically configured to receive the third response sent by the second communication device.

Optionally, the second request receiving module is specifically configured to receive the second request sent by the first communication device; and
the second response sending module is specifically configured to send the second response to the first communication device.

Optionally, the apparatus further includes a query module, where
the query module is configured to discover the index information of the target network element based on the second information.

Optionally, the second information includes at least one of the following:
a data network identifier DNN;
a single network slice identifier S-NSSAI; and
a data network access identifier DNAI.

Optionally, the target network element includes at least one of the following:
an SMF; and
a UPF.

Optionally, the index information of the target network element includes at least one of the following:
an IP address of the target network element;
an FQDN of the target network element;
a port number of the target network element; and
an identifier ID of the target network element.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

The related steps performed by the foregoing target information obtaining apparatus correspond to implementations in the foregoing implementation 1 to implementation 4. Details are not described herein again.

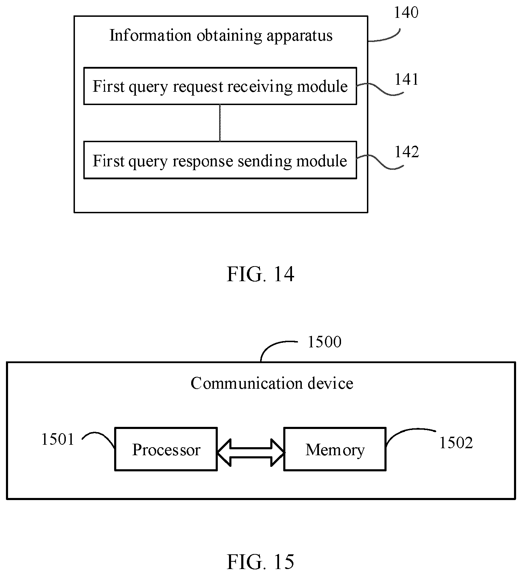

According to an eighth aspect, an embodiment of this application provides another information obtaining apparatus. The apparatus may be applied to a fourth communication device. As shown in FIG. 14, the target information obtaining apparatus 140 includes:
a first query request receiving module 141, configured to receive a first query request, where the first query request includes first information, the first query request is used to request to query second information corresponding to the first information, the first information is used by a first communication device to determine a target network element corresponding to any terminal, and related data on the any terminal is used by the first communication device to determine a related analytics result on the any terminal; and
a first query response sending module 142, configured to send a first query response, where the first query response includes the second information.

Optionally, in a case that the first information is an application identifier (application identifier), the apparatus further includes a second query request receiving module and a second query response sending module, where
the second query request receiving module is configured to receive a second query request, where the second query request includes the application identifier (application identifier), and the second query request is used to request to query at least one data packet flow descriptor PFD corresponding to the application identifier (application identifier); and
the second query response sending module is configured to send a second query response, where the second query response includes the at least one data packet flow descriptor PFD corresponding to the application identifier (application identifier), and the data packet flow descriptor PFD includes at least one of the following: one or more server IP addresses and/or server port numbers.

Optionally, the first query request receiving module is specifically configured to receive the first query request sent by a second communication device;
the first query response sending module is specifically configured to send the first query response to the second communication device;
the second query request receiving module is specifically configured to receive the second query request sent by the second communication device; and
the second query response sending module is specifically configured to send the second query response to the second communication device.

Optionally, the second information includes at least one of the following:
a data network identifier DNN;
a single network slice identifier S-NSSAI; and
a data network access identifier DNAI.

Optionally, the first information includes at least one of the following:
an application server IP address;
an application server port number;
an application server FQDN;
an application identifier (application identifier); and
a UPF anchor ID.

Optionally, the first information does not include at least one of the following:
a data network identifier DNN;
a single network slice identifier S-NSSAI; and
a data network access identifier DNAI.

The related steps performed by the foregoing target information obtaining apparatus correspond to implementations in the foregoing implementation 1 to implementation 4. Details are not described herein again.

A target information obtaining apparatus provided in an embodiment of this application can implement each process implemented by the corresponding embodiment of the target information obtaining method, with the same technical effect achieved. To avoid repetition, details are not described herein again. Similarly, an information obtaining apparatus provided in an embodiment of this application can implement each process implemented by the corresponding embodiment of the information obtaining method, with the same technical effect achieved. To avoid repetition, details are not described herein again.

Optionally, as shown in FIG. 15, an embodiment of this application further provides a communication device 1500. The communication device may be the foregoing first communication device, second communication device, third communication device, or fourth communication device. As shown in FIG. 15, the communication device 1500 includes a processor 1501 and a memory 1502, where the memory 1502 stores a program or instructions capable of running on the processor 1501. For example, when the communication device 1500 is the first communication device, and the program or instructions are executed by the processor 1501, the steps of the foregoing embodiment of the target information obtaining method according to the first aspect are implemented, with the same technical effect achieved; when the communication device 1500 is the first communication device, and the program or instructions are executed by the processor 1501, the steps of the foregoing embodiment of the target information obtaining method according to the first aspect are implemented, with the same technical effect achieved; when the communication device 1500 is the second communication device, and the program or instructions are executed by the processor 1501, the steps of the foregoing embodiment of the information obtaining method according to the second aspect are implemented, with the same technical effect achieved; when the communication device 1500 is the third communication device, and the program or instructions are executed by the processor 1501, the steps of the foregoing embodiment of the target information obtaining method according to the third aspect are implemented, with the same technical effect achieved; or when the communication device 1500 is the fourth communication device, and the program or instructions are executed by the processor 1501, the steps of the foregoing embodiment of the information obtaining method according to the fourth aspect are implemented, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment is implemented, with the same technical effect achieved. To avoid repetition, details are not described herein again.

The processor is a processor in the terminal device described in the foregoing embodiments. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the target information obtaining method or the information obtaining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the target information obtaining method or the information obtaining method, with the same technical effect achieved. To avoid repetition, details are not described herein again.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to the process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A target information obtaining method, comprising:
receiving, by a first communication device, a first request, wherein the first request is used to request the first communication device to provide a related analytics result on any terminal, the first request comprises first information, the first information is used by the first communication device to determine a target network element corresponding to the any terminal, and related data on the any terminal is used by the first communication device to determine the related analytics result on the any terminal;
sending, by the first communication device, a second request, wherein the second request comprises the first information or second information corresponding to the first information, and the second request is used to request to discover index information of the target network element; and
receiving, by the first communication device, a second response, wherein the second response comprises the index information of the target network element, and the index information is used by the first communication device to interact with the target network element or collect the related data on the any terminal from the target network element.

2. The method according to claim 1, wherein before the sending, by the first communication device, a second request comprising second information, the method further comprises: sending, by the first communication device, a third request, wherein the third request comprises the first information, and the third request is used to request to obtain the second information corresponding to the first information; and
receiving, by the first communication device, a third response, wherein the third response comprises the second information.

3. The method according to claim 1, wherein in a case that the first information is an application identifier (application identifier), before the sending, by the first communication device, a second request comprising second information, the method further comprises:
sending, by the first communication device, at least one third request, wherein each third request comprises at least one server IP address and/or server port number corresponding to the application identifier and determined based on the application identifier (application identifier), and each third request is used to request second information corresponding to one server IP address and/or server port number; and
receiving, by the first communication device, at least one third response, wherein each third response comprises second information corresponding to one server IP address and/or server port number.

4. The method according to claim 3, wherein before the sending, by the first communication device, at least one third request, the method further comprises:
sending, by the first communication device, a fourth request, wherein the fourth request comprises the application identifier (application identifier), and the fourth request is used to obtain at least one data packet flow descriptor PFD corresponding to the application identifier (application identifier); and
receiving, by the first communication device, a fourth response, wherein the fourth response comprises the at least one data packet flow descriptor PFD corresponding to the application ID, and the data packet flow descriptor PFD comprises at least one of the following: one or more server IP addresses and/or server port numbers.

5. The method according to claim 4, wherein the sending, by the first communication device, a fourth request comprises: sending, by the first communication device, the fourth request to a second communication device; and
the receiving, by the first communication device, a fourth response comprises: receiving, by the first communication device, the fourth response sent by the second communication device.

6. The method according to claim 2 or 3, wherein the sending, by the first communication device, a third request comprises: sending, by the first communication device, the third request to a second communication device; and
the receiving, by the first communication device, a third response comprises: receiving, by the first communication device, the third response sent by the second communication device.

7. The method according to any one of claims 1 to 5, wherein the sending, by the first communication device, a second request comprises: sending, by the first communication device, the second request to a third communication device; and
the receiving, by the first communication device, a second response comprises: receiving, by the first communication device, the second response sent by the third communication device.

8. The method according to any one of claims 1 to 5, wherein the first information comprises at least one of the following:
an application server IP address;
an application server port number;
an application server FQDN;
an application identifier (application identifier); and
a UPF anchor ID.

9. The method according to any one of claims 1 to 5, wherein the first information does not comprise at least one of the following:
a data network identifier DNN;
a single network slice identifier S-NSSAI; and
a data network access identifier DNAI.

10. The method according to any one of claims 1 to 5, wherein the second information comprises at least one of the following:
a data network identifier DNN;
a single network slice identifier S-NSSAI; and
a data network access identifier DNAI.

11. The method according to any one of claims 1 to 5, wherein the target network element comprises at least one of the following:
an SMF; and
a UPF.

12. The method according to claim 1, wherein in a case that the target network element comprises an SMF and/or a UPF and that the first information is a UPF anchor ID, the method further comprises:
determining, by the first communication device based on the UPF anchor ID, a UPF and/or index information of a UPF corresponding to the UPF anchor ID, wherein the UPF corresponding to the UPF anchor ID stores index information of an associated SMF;
sending, by the first communication device, a fifth request, wherein the fifth request comprises the UPF anchor ID, and the fifth request is used to request the index information of the SMF associated with the UPF corresponding to the UPF anchor ID; and
receiving, by the first communication device, a fifth response, wherein the fifth response comprises the index information of the SMF associated with the UPF corresponding to the UPF anchor ID.

13. The method according to any one of claims 1 to 5 or 12, wherein the index information of the target network element comprises at least one of the following:
an IP address of the target network element;
an FQDN of the target network element;
a port number of the target network element; and
an identifier ID of the target network element.

14. An information obtaining method, comprising:
receiving, by a second communication device, a third request, wherein the third request comprises first information, the third request is used to request second information corresponding to the first information, the first information is used by a first communication device to determine a target network element corresponding to any terminal, and related data on the any terminal is used by the first communication device to determine a related analytics result on the any terminal; and
sending, by the second communication device, a third response, wherein the third response comprises the second information, and the second information is used to discover the target network element corresponding to the any terminal.

15. The method according to claim 14, wherein the receiving, by a second communication device, a third request comprises: receiving, by the second communication device, the third request sent by the first communication device; and the sending, by the second communication device, a third response comprises: sending, by the second communication device, the third response to the first communication device; or
the receiving, by a second communication device, a third request comprises: receiving, by the second communication device, the third request sent by a third communication device; and the sending, by the second communication device, a third response comprises: sending, by the second communication device, the third response to the third communication device.

16. The method according to claim 14, wherein after the receiving, by a second communication device, a third request, or before the sending a third response, the method further comprises:
sending, by the second communication device, a first query request, wherein the first query request comprises the first information, and the first query request is used to request to query the second information corresponding to the first information; and
receiving, by the second communication device, a first query response, wherein the first query response comprises the second information corresponding to the first information.

17. The method according to claim 16, wherein the sending, by the second communication device, a third response comprises:
in a case that the second communication device stores the second information corresponding to the first information, directly sending, by the second communication device, the third response, or skipping sending, by the second communication, the first query request.

18. The method according to claim 16, wherein the sending, by the second communication device, a first query request comprises: sending, by the second communication device, the first query request to a fourth communication device; and
the receiving, by the second communication device, a first query response comprises: receiving, by the second communication device, the first query response sent by the fourth communication device.

19. The method according to claim 14, wherein in a case that the first information is an application identifier (application identifier), the receiving, by a second communication device, a third request comprises:
receiving, by the second communication device, at least one third request, wherein each third request comprises at least one server IP address and/or server port number corresponding to the application identifier (application identifier), and each third request is used to request second information corresponding to one server IP address and/or server port number; and
the sending, by the second communication device, a third response comprises:
sending, by the second communication device, at least one third response, wherein each third response comprises second information corresponding to one server IP address and/or server port number.

20. The method according to claim 19, wherein before the receiving, by the second communication device, at least one third request, the method further comprises:
receiving, by the second communication device, a fourth request, wherein the fourth request comprises the application identifier (application identifier), and the fourth request is used to obtain at least one data packet flow descriptor PFD corresponding to the application identifier (application identifier); and
sending, by the second communication device, a fourth response, wherein the fourth response comprises the at least one data packet flow descriptor PFD corresponding to the application ID, and the data packet flow descriptor PFD comprises at least one of the following: one or more server IP addresses and/or server port numbers.

21. The method according to claim 20, wherein after the receiving, by the second communication device, a fourth request, or before the sending a fourth response, the method further comprises:
sending, by the second communication device, a second query request, wherein the second query request comprises the application identifier (application identifier), and the second query request is used to request to query the at least one data packet flow descriptor PFD corresponding to the application identifier (application identifier); and
receiving, by the second communication device, a second query response, wherein the second query response comprises the at least one data packet flow descriptor PFD corresponding to the application identifier (application identifier), and the data packet flow descriptor PFD comprises at least one of the following: the one or more server IP addresses and/or server port numbers.

22. The method according to claim 21, wherein the receiving, by the second communication device, at least one third request comprises: receiving, by the second communication device, at least one third request sent by a fourth communication device;
the sending, by the second communication device, at least one third response comprises: sending, by the second communication device, the at least one third response to the fourth communication device;
the receiving, by the second communication device, a fourth request comprises: receiving, by the second communication device, the fourth request sent by the first communication device;
the sending, by the second communication device, a fourth response comprises: sending, by the second communication device, the fourth response to the first communication device;
the sending, by the second communication device, a second query request comprises: sending, by the second communication device, the second query request to the fourth communication device; and
the receiving, by the second communication device, a second query response comprises: receiving, by the second communication device, the second query response sent by the fourth communication device.

23. The method according to any one of claims 14 to 19, wherein the first information comprises at least one of the following:
an application server IP address;
an application server port number;
an application server FQDN;
an application identifier (application identifier); and
a UPF anchor ID.

24. The method according to any one of claims 14 to 19, wherein the first information does not comprise at least one of the following:
a data network identifier DNN;
a single network slice identifier S-NSSAI; and
a data network access identifier DNAI.

25. The method according to any one of claims 14 to 19, wherein the second information comprises at least one of the following:
a data network identifier DNN;
a single network slice identifier S-NSSAI; and
a data network access identifier DNAI.

26. The method according to any one of claims 14 to 19, wherein the target network element comprises at least one of the following:
an SMF; and
a UPF.

27. A target information obtaining method, comprising:
receiving, by a third communication device, a second request, wherein the second request comprises first information or second information corresponding to first information, the second request is used to discover index information of a target network element, the first information is used by a first communication device to determine a target network element corresponding to any terminal, related data on the any terminal is used by the first communication device to determine a related analytics result on the any terminal, and the second information is used to discover the target network element corresponding to the any terminal; and
sending, by the third communication device, a second response, wherein the second response comprises the index information of the target network element, and the index information is used by the first communication device to interact with the target network element or collect the related data on the any terminal from the target network element.

28. The method according to claim 27, wherein in a case that the second request is a second request comprising the first information, the method further comprises:
sending, by the third communication device, a third request, wherein the third request comprises the first information, and the third request is used to request to obtain the second information corresponding to the first information; and
receiving, by the third communication device, a third response, wherein the third response comprises the second information corresponding to the first information.

29. The method according to claim 28, wherein the sending, by the third communication device, a third request comprises: sending, by the third communication device, the third request to a second communication device; and
the receiving, by the third communication device, a third response comprises: receiving, by the third communication device, the third response sent by the second communication device.

30. The method according to any one of claims 27 to 29, wherein the receiving, by a third communication device, a second request comprises: receiving, by the third communication device, the second request sent by the first communication device; and
the sending, by the third communication device, a second response comprises: sending, by the third communication device, the second response to the first communication device.

31. The method according to any one of claims 27 to 29, wherein before the sending, by the third communication device, a second response, the method further comprises:
discovering, by the third communication device, the index information of the target network element based on the second information.

32. The method according to any one of claims 27 to 31, wherein the second information comprises at least one of the following:
a data network identifier DNN;
a single network slice identifier S-NSSAI; and
a data network access identifier DNAI.

33. The method according to any one of claims 27 to 31, wherein the target network element comprises at least one of the following:
an SMF; and
a UPF.

34. The method according to any one of claims 27 to 31, wherein the index information of the target network element comprises at least one of the following:
an IP address of the target network element;
an FQDN of the target network element;
a port number of the target network element; and
an identifier ID of the target network element.

35. An information obtaining method, comprising:
receiving, by a fourth communication device, a first query request, wherein the first query request comprises first information, the first query request is used to request to query second information corresponding to the first information, the first information is used by a first communication device to determine a target network element corresponding to any terminal, and related data on the any terminal is used by the first communication device to determine a related analytics result on the any terminal; and
sending, by the fourth communication device, a first query response, wherein the first query response comprises the second information.

36. The method according to claim 35, wherein in a case that the first information is an application identifier (application identifier), before the receiving, by a fourth communication device, a first query request, the method further comprises:
receiving, by the fourth communication device, a second query request, wherein the second query request comprises the application identifier (application identifier), and the second query request is used to request to query at least one data packet flow descriptor PFD corresponding to the application identifier (application identifier); and
sending, by the fourth communication device, a second query response, wherein the second query response comprises the at least one data packet flow descriptor PFD corresponding to the application identifier (application identifier), and the data packet flow descriptor PFD comprises at least one of the following: one or more server IP addresses and/or server port numbers.

37. The method according to claim 36, wherein the receiving, by a fourth communication device, a first query request comprises:
receiving, by the fourth communication device, the first query request sent by a second communication device;
the sending, by the fourth communication device, a first query response comprises: sending, by the fourth communication device, the first query response to the second communication device;
the receiving, by the fourth communication device, a second query request comprises: receiving, by the fourth communication device, the second query request sent by the second communication device; and
the sending, by the fourth communication device, a second query response comprises: sending, by the fourth communication device, the second query response to the second communication device.

38. The method according to any one of claims 35 to 37, wherein the second information comprises at least one of the following:
a data network identifier DNN;
a single network slice identifier S-NSSAI; and
a data network access identifier DNAI.

39. The method according to any one of claims 35 to 37, wherein the first information comprises at least one of the following:
an application server IP address;
an application server port number;
an application server FQDN;
an application identifier (application identifier); and
a UPF anchor ID.

40. The method according to any one of claims 35 to 37, wherein the first information does not comprise at least one of the following:
a data network identifier DNN;
a single network slice identifier S-NSSAI; and
a data network access identifier DNAI.

41. A target information obtaining apparatus, comprising:
a first request receiving module, configured to receive a first request, wherein the first request is used to request a first communication device to provide a related analytics result on any terminal, the first request comprises first information, the first information is used by the first communication device to determine a target network element corresponding to the any terminal, and related data on the any terminal is used by the first communication device to determine the related analytics result on the any terminal;
a second request sending module, configured to send a second request, wherein the second request comprises the first information or second information corresponding to the first information, and the second request is used to request to discover index information of the target network element; and
a second response receiving module, configured to receive a second response, wherein the second response comprises the index information of the target network element, and the index information is used by the first communication device to interact with the target network element or collect the related data on the any terminal from the target network element.

42. An information obtaining apparatus, comprising:
a third request receiving module, configured to receive a third request, wherein the third request comprises first information, the third request is used to request second information corresponding to the first information, the first information is used by a first communication device to determine a target network element corresponding to any terminal, and related data on the any terminal is used by the first communication device to determine a related analytics result on the any terminal; and
a third response sending module, configured to send a third response, wherein the third response comprises the second information, and the second information is used to discover the target network element corresponding to the any terminal.

43. A target information obtaining apparatus, comprising:
a second request receiving module, configured to receive a second request, wherein the second request comprises first information or second information corresponding to first information, the second request is used to discover index information of a target network element, the first information is used by a first communication device to determine a target network element corresponding to any terminal, related data on the any terminal is used by the first communication device to determine a related analytics result on the any terminal, and the second information is used to discover the target network element corresponding to the any terminal; and
a second response sending module, configured to send a second response, wherein the second response comprises the index information of the target network element, and the index information is used by the first communication device to interact with the target network element or collect the related data on the any terminal from the target network element.

44. An information obtaining apparatus, comprising:
a first query request receiving module, configured to receive a first query request, wherein the first query request comprises first information, the first query request is used to request to query second information corresponding to the first information, the first information is used by a first communication device to determine a target network element corresponding to any terminal, and related data on the any terminal is used by the first communication device to determine a related analytics result on the any terminal; and
a first query response sending module, configured to send a first query response, wherein the first query response comprises the second information.

45. A first communication device, comprising a processor and a memory, wherein the memory stores a program or instructions capable of running on the processor, and when the program or instructions are executed by the processor, the steps of the target information obtaining method according to any one of claims 1 to 13 are implemented.

46. A second communication device, comprising a processor and a memory, wherein the memory stores a program or instructions capable of running on the processor, and when the program or instructions are executed by the processor, the steps of the information obtaining method according to any one of claims 14 to 26 are implemented.

47. A third communication device, comprising a processor and a memory, wherein the memory stores a program or instructions capable of running on the processor, and when the program or instructions are executed by the processor, the steps of the target information obtaining method according to any one of claims 27 to 34 are implemented.

48. A fourth communication device, comprising a processor and a memory, wherein the memory stores a program or instructions capable of running on the processor, and when the program or instructions are executed by the processor, the steps of the information obtaining method according to any one of claims 35 to 40 are implemented.
